(19) Europäisches Patentamt
European Patent Office
Office européen des brevets

(11) Publication number: 0 478 293 A2

(12) **EUROPEAN PATENT APPLICATION**

(21) Application number: 91308717.7

(51) Int. Cl.[5]: C09D 7/00

(22) Date of filing: 25.09.91

(30) Priority: 27.09.90 US 588997

(43) Date of publication of application: 01.04.92 Bulletin 92/14

(84) Designated Contracting States: AT BE CH DE DK ES FR GB GR IT LI LU NL SE

(71) Applicant: CALGON CORPORATION
Route 60-Campbell's Run Road
Robinson Township Pennsylvania 15205 (US)

(72) Inventor: Rey, Paul A.
203 Oakhaven Drive
Coraopolis, PA 15108 (US)

(74) Representative: Barrett-Major, Julie Diane et al
Merck & Co., Inc. European Patent Department Terlings Park Eastwick Road
Harlow Essex CM20 2QR (GB)

(54) **Methods for removing solids from solvent-based/water-based paint systems.**

(57) Methods of treating circulating water containing over-sprayed, water-borne and solvent-based paints, such as in a paint spray booth operation, comprise adjusting the alkalinity of the paint spray booth water to between about 100 and 600 ppm, on a calcium carbonate basis, by adding an alkalinity source thereto, adding a melamine polymer to the water, contacting the over-sprayed, water-borne and solvent-borne paints with the alkalinity-adjusted paint spray booth water before or after addition of the melamine polymer, adding an effective amount of a flocculant to the paint spray booth water, and removing resulting sludge from the paint spray booth water.

EP 0 478 293 A2

## FIELD OF THE INVENTION

The present invention relates to methods of treating circulating water containing over-sprayed, water-borne and solvent-borne paint, for example, circulating water in a wet paint spray booth operation.

## BACKGROUND OF THE INVENTION

Automobile bodies and many industrial and consumer articles are conventionally spray painted in areas called spray booths, wherein water curtains are employed to cleanse the air of over-sprayed paint. The wash water is then treated to remove paint solids, and the treated water is recirculated.

A water curtain is typically created by pumping water into a trough above the over spray area. The overflow from the trough is controlled so that a uniform sheet of water falls along the length of the trough and down the booth's wall. Spray nozzles are also commonly used. Fine droplets of over sprayed paint, emitted by a spray gun, contact and are captured by the water curtain. The amount of paint contacting a water curtain may change depending on a number of variables, including plant or process shutdowns, the size and shape of the object being painted, the type of spray equipment used, the spraying and purge technique used, and the water flow and the type of paint used.

Solvent-based or solvent-borne paints are commonly employed in spray booths. However, in response to federal regulations limiting the amount of volatile hydrocarbons, namely the solvent dilutant used in solvent-based paint, which can be emitted from a plant site, water-borne or water-based paints are now being used in spray booth operations. This means that, in the future, the circulating waters of spray booth operations may often times contain both solvent-borne paint and water-borne paint.

The term "solvent-based paints," as used herein, refers to all varieties of water-insoluble coatings applied in spraying operation, including but not limited to oil base paints, enamels, urethanes and lacquers. These products, if untreated, readily adhere to the walls of spray booths and any other surface that they contact, such as the surfaces of water distribution piping, spray nozzles, and the like. As used herein, the terms "solvent-based paints" and "solvent-borne paints" are synonymous.

The term "water-based paints", as used herein, refers to all varieties of coatings which contain in excess of approximately 10% water in the coating formulation, including, but not limited to, water-reducible alkyd and epoxy ester compositions, water-borne thermoplastic latex compositions using acrylic polymer/ copolymers, water-based latexes of polyurethane dispersions, and blends of such compositions. As used herein, the terms "water-based paints" and "water-borne paints" are synonymous.

A primary treatment objective relative to solvent-based paints concerns the tacky or adhesive nature of the over-sprayed coating material. Due to their hydrophobicity, solvent-based paint solids tend to coalesce and accumulate on the walls, ceilings and floors of spray areas and to clog water spray equipment, recirculating pumps and the like. Thus, the over-spray, or paint mist, captured in the water system of a spray booth must be detackified, or "killed," to prevent adherence to the walls, piping, etc. of the spray booth. Paint that sticks to spray booth surfaces usually cannot be easily removed from the equipment and tends to build up over time, thereby hampering spray booth efficacy.

A primary treatment objective relative to water-based paints is to capture and collect finely-dispersed paint solids. Uncaptured solids tend to accumulate in the system and to settle in sludge recovery pits and in booth weirs. Such solids encourage the growth of anaerobic bacteria colonies which may result in odor problems. This treatment problem is aggravated with paints which are water-based, because they are more hydrophilic. In other words, they contain resins and dyes which are more compatible with water.

These treatment objectives are generally diametrically opposed relative to alkalinity concentration. That is, the present inventor has discovered that improved detackification of solvent-based paints occurs in water systems having relatively high alkalinity while, on the other hand, improved collection of water-based paints occurs in water systems having relatively low alkalinity. Other problems which severely interfere with spray booth operations occur in areas of high agitation where foaming occurs and in areas where foam accumulates. Foaming is caused by chemical additives, surfactants, solvents or combinations thereof. Also, finely dispersed paint solids which are not captured and removed tend to stabilize foam, which aggravates foaming problems. Foaming generally mandates that copious amounts of defoamers be used, which results in higher operating costs. Water-based paints generally tend to cause foaming to a greater extent than solvent-based paints.

A wide variety of chemicals have been proposed as treating agents for circulating wet spray booth waters containing over-spray paint, including compositions containing polymers and amphoteric metal salts which form insoluble hydroxides at pH's greater than about 7. The use of combinations of this type are described in the following U.S. Patents: 3,861,887 to Forney; 3,990,986 to Gabel et al; 4,002,490 to Michalski et al; 4,130,674 to Roberts et al; and 4,440,647 to Puchalski. Further, U.S. Patent No. 4,637,824 to Pominville discloses the use of silicates and polydiallyldialkylammonium halides with amphoteric metal salts, and U.S. Patent No. 4,853,132 to Merrell et al discloses the use of precipitates formed by the reaction of cationic polymers and salts of inorganic anions to detackify solvent-based paints. Bentonite clays, aluminum salts and zinc salts have also been used with cationic polymers.

U.S. Patent No. 4,656,059 to Mizuno et al relates to the use of melamine-aldehyde acid colloid solutions for treating paint in wet spray booths, and U. S. Patent No. 4,629,572 to Leitz et al relates to the use of urea or amino triazine-aldehyde condensation reaction products in combination with water-swellable clays to treat paint spray booth wastes.

US Patent No. 4,935,149 discloses methods for detackification of paint spray systems using melamine-formaldehyde polymers. The instant invention is distinguishable over the inventions of Mizuno et al and US Patent No. 4,935,149 in that the instant invention is specifically directed to particular alkalinity/melamine polymer/flocculant-based systems which can be used with improved results to treat circulating paint spray booth waters containing both over-sprayed solvent-based paints and over-sprayed water-based paints. Thus, melamine-formaldehyde-type polymers, in conjunction with specific alkalinity sources and specific polymeric flocculants, applied within narrow operating conditions, provide improved treatment of solvent-based and water-based paint-containing systems.

## SUMMARY OF THE INVENTION

That is, the instant inventor has discovered that melamine polymers, in conjunction with specified alkalinity sources and polymeric flocculants, applied within narrowly designated operating ranges, can be used with improved results to treat water which contains both water-based and solvent-based paints. Such water, after being treated to capture and collect the over-sprayed paints contained therein is typically recirculated in paint spray booth operations. The Inventor has also discovered that order-of-addition and point-of-addition are important relative to optimal treatment.

More particularly, the present invention relates to methods of treating circulating paint spray booth water containing over-sprayed solvent-borne paint and water-borne paint to facilitate removal of these over-sprayed solvent-borne and water-based paints from such water.

A number of automotive manufacturers use a three coat system (e.g., primer/basecoat/clearcoat) for painting automobiles and trucks. Generally, the primer and clearcoat are solvent-borne paints, while water-borne paints are rapidly finding acceptance for use as basecoats in automotive and fascia manufacture. This is due in part to government regulations controlling volatile organic carbon emissions from paint spray operations. While combined water systems for treating and collecting over-sprayed water-based and solvent-based paints offer significant advantages in terms of capital equipment expenditure and ease of operation, water-based and solvent-based paints are generally characterized by diverse behavior in water in the presence of alkalinity.

As shown in Fig. 1, the treatment of solvent-borne and water-borne paints is significantly affected by alkalinity. The Inventor has discovered that a narrow alkalinity range provides optimal treating of both paints; thus relatively low alkalinity favors water-based paints (i.e., less than 300 ppm as $CaCO_3$) while solvent-borne paints are best treated at relatively high alkalinity levels (i.e., greater than 400 ppm as $CaCO_3$). For this reason, the treatment of both water-borne and solvent-borne paints in the same system appears to be contradictory based on how the respective paints react to alkalinity.

A successful program must meet the treatment need of both types of paint. In the low alkalinity region, solvent-borne paints are not adequ7ately detackified. High alkalinity generally causes water-borne paints to over disperse, thereby significantly reducing effectiveness. Operation within a range of intermediate alkalinity provides effective treatment for a combination of water-borne and solvent-borne paints.

The instant Inventor has also discovered that improved results may be obtained based on order-of-addition and point-of-addition factors.

The methods of the present invention are highly efficient for treating systems containing a wide variety of water-based paints and solvent-based paints. Additionally, the present methods generally produce a low-volume, flocculated, predominantly organic sludge which may be readily disposed of in land fills or by incineration.

These and additional advantages will be more apparent in view of the following detailed description.

## BRIEF DESCRIPTION OF THE DRAWING

The following detailed description will be more fully understood in view of the drawing which includes:

Fig. 1 which discloses the measured transmittance of various water-borne and solvent-borne paints as described in Example 1; and

Fig. 2 which shows the impact of alkalinity on the performance of a melamine-formaldehyde-based treatment.

## DETAILED DESCRIPTION

The present invention relates to a method for treating circulating paint spray booth water containing over-sprayed solvent-based and water-based paints to facilitate the removal of said over-sprayed paints from the water being treated, i.e., the water of a spray booth operation. The present method comprises adjusting the alkalinity of the water in the aqueous

system being treated, namely circulating paint spray booth water, to between 100 to 600 ppm, on a calcium carbonate basis, and preferably, to between 200 to 400 ppm as $CaCO_3$; adding to said water an effective amount of a melamine polymer; contacting said over-sprayed paints with the alkalinity-adjusted water before or after the addition of an effective amount of the melamine polymer; adding a flocculant to the water being treated after said over-sprayed paints contact the alkalinity and melamine polymer; and removing resulting sludge from the water being treated.

Before the over-sprayed, water-based paint and solvent-based paint contacts paint spray booth water, the alkalinity of the water in the paint spray booth system being treated should be adjusted to provide a minimum alkalinity of about 100 ppm (as $CaCO_3$) to a maximum alkalinity of about 600 ppm. Preferably, the alkalinity should be maintained between about 200 and about 400 ppm (as $CaCO_3$), and most preferably between about 250 and 350 ppm (as $CaCO_3$). These alkalinity ranges are generally critical. At higher alkalinity dosages, paint solids become increasingly difficult to capture, which decreases separation efficiency. At even higher dosages, the paint solids tend to sink instead of float. If sufficient alkalinity is not present (i.e., below about 100-200 ppm), the melamine polymer is not as effective, resulting in very poor collection efficiency and poor detackification of the solvent-based paint.

Additionally, the pH of the water being treated should be maintained between about 6.0 and about 8.0, preferably between about 6.0 and about 7.5. A pH of at least about 6.0 is desirable in order to activate the melamine polymer. As the pH is lowered below about 6.0, corrosion in the system generally increases. On the other hand, a pH of greater than about 8.0 generally results in greater solids dispersion, thus creating less efficient solids capture, and causes greater foam generation.

Alkalinity can be added in the form of carbonates, for example, alkali metal carbonates and alkali metal bicarbonates such as sodium carbonate or sodium bicarbonate, NaOH, KOH, silicates and/or blends thereof. However, preferred alkalinity sources are alkali metal carbonates and silicates, with sodium carbonate, sodium bicarbonate, and mixtures thereof being especially preferred. These alkalinity sources are generally inexpensive and safe to use, and they provide excellent flotation to the water-based paint solids when used in combination with polymeric flocculants. Thus, alkalinity, particularly carbonate alkalinity, assists in floating the flocculated paint particles to the surface of the water system being treated.

The alkalinity should be adjusted so that the water forming the curtain which contacts the over-sprayed paint or paints is in the designated alkalinity range. Any method of adding the source of alkalinity can be used, including batch or continuous addition, with continuous addition being preferred.

In addition to the alkalinity requirement, an effective amount of, a melamine polymer must be used. As used herein, the melamine polymer is a polymer prepared from (a) melamine or a substituted melamine; and (b) a compound described by the following formula:

$$R_1 - \overset{O}{\overset{\|}{C}} - R_2$$

wherein $R_1$ and $R_2$, which may be the same or different, are selected from the group consisting of H and straight or branched $C_{1-4}$ alkyl groups. The preferred compounds of (b) comprise aldehydes, with methanal (formaldehyde), ethanal and propanal being especially preferred; the most preferred aldehyde is formaldehyde.

The mole ratio of component (a) to component (b) should range from about 1:1 to about 1:6, with the preferred ratio being from about 1:1 to 1:3. The most preferred mole ratio is about 1 mole of melamine or a derivative thereof to about 2 to 2.5 moles of an aldehyde. Thus, the most preferred polymer is prepared from melamine and formaldehyde with the mole ratio of melamine to formaldehyde being about 1: 2 to about 1:2.5.

The instant melamine polymers are insoluble in water. They are therefore best utilized in acidic solutions wherein the melamine polymer is stabilized in a fine colloidal state of suspension. Calgon's product CA-289, which has a pH of about 1. 6 to about 2.1, is an example of the preferred form. This product contains 8% active melamine-formaldehyde polymer in an acidic aqueous solution. Any acid can be used to prepare the melamine aldehyde acid suspension, although hydrochloric acid is preferred. Also, other stabilizing agents, such as alcohols, can be used.

The percent by weight of active melamine polymer in a stabilized (acidic) suspension or solution should range from about 0.1% to about 20%, preferably 1% to about 15%, and most preferably about 4% to about 12%, due to cost and product stability considerations. The pH should be sufficiently low to keep the melamine aldehyde-type polymer in a fine colloidal suspension.

The molecular weight of the melamine aldehyde-type polymer is not critical. However, the preferred molecular weight ranges from about 500 to about 50,000, and the most preferred molecular weight ranges from about 500 to about 5,000. As noted above, suitable melamine aldehyde-type polymers are commercially available from Calgon Corporation, under the tradenames CA-289, WT-2511 and PK-9511. These products have molecular weights of about 2,200.

An effective amount of the melamine polymer should be added to or maintained in the water being treated. The melamine polymer reacts with the alkalinity to form a fine precipitate. As used herein, the term "effective amount" refers to that amount of melamine polymer which achieves the desired water clarity and paint solids capture after addition of flocculant to the system being treated.

The melamine polymer can be applied intermittently or continuously to the water system being treated at a preferred dosage of from between about 0.001 to about 1.0 part melamine polymer (active basis) per part paint, most preferably between about 0.01 and about 0.5 part active melamine polymer per part paint. Since spraying is generally continuous, continuous addition of the melamine polymer is preferred. The melamine polymer may be added at any convenient location, but is preferably added so as to allow the maximum concentration of the melamine polymer to contact the over-sprayed paints. For example, the melamine polymer may be added to a line supplying the trough or other device used to form the water curtain. Multiple points of addition are preferred. It is also preferred that the melamine-aldehyde polymer feed be split so as to add at least 5% of the polymer prior to contact with the paints and to add at least 5% of the polymer after contact with the paints. The alkalinity adjustment and melamine polymer addition steps may be carried out simultaneously, noting, however, that alkalinity adjustment occurs prior to contact between the over-sprayed paint and the circulated paint spray booth water. The key factor is that the over-sprayed paint contact water within the desired alkalinity range which either contains an effective amount of a melamine polymer, or to which an effective amount of melamine polymer is added.

In a typical paint spray booth operation, the return water from the booth generally encounters extreme turbulence. This turbulence improves the efficacy of the treatment by promoting intimate contact between the paint and the melamine polymer.

After over-sprayed, water-based and solvent-based paints contact alkalinity and the melamine polymer in the circulating water, a polymeric flocculant is added to the paint spray booth water system. The flocculant promotes the formation of a buoyant floc structure by binding the conditioned paint particles and incorporating air into the floc structure. The resulting floating floc facilitates the removal of paint solids from the circulating water system.

According to this invention, it has been found that the type of polymeric flocculant which is used is important and that the molecular weight of the polymeric flocculant used is important. A suitable flocculant comprises at least one nonionic polymer, at least one anionic polymer, at least one cationic polymer, at least one amphoteric polymer, or a mixture thereof. Nonionic polymeric flocculants are preferred. Generally, flocculants having weight average molecular weights of at least 2 x $10^6$ are preferred. More preferably, the molecular weight should exceed about 6 x $10^6$. Examples of flocculants include long chain polyacrylamides and long chain polymethacrylamides. The most preferred flocculants are nonionic polyacrylamides having a weight average molecular weight ranging from about 6 x $10^6$ to about 20 x $10^6$.

Typical cationic polyelectrolytes which may be used as flocculants in the instant invention include but are not limited to polyamines, polyphosphonium compounds, polysulfonium compounds, quaternary ammonium compounds, polymers of methacryloyloxethyl trimethyl ammonium methyl sulfate (METAMS), polymers of methacrylamido propyl trimethyl ammonium chloride (MAPTAC), polymers of acryloyloxyethyl trimethyl ammonium chloride (AETAC), polymers of methacryloyloxyethyl trimethyl ammonium chloride (METAC) and polymers prepared from combinations of METAMS, MAPTAC, AETAC and/or ETAC with acrylamide and/or methyacrylamide. Representative of quaternary ammonium compounds are diethyldiallyl ammonium and dimethyldiallyl ammonium polymers and salts thereof.

The preferred cationic flocculants are quaternary ammonium polymers such as polydimethyldiallyl ammonium chloride (polyDMDAAC), poly dimethyldiallyl ammonium bromide (polyDMDAAB), poly diethyldiallyl ammonium chloride (polyDEDAAB), or any of the same copolymerized with acrylamide or methacrylamide. The preferred molecular weights for the quaternary ammonium polymers are in excess of about 2,000,000.

The most preferred cationic flocculant is a polymer comprising dimethyl diallyl ammonium chloride and acrylamide, or a homologue thereof, having a weight average molecular weight in excess of about 4,000,000. The ratio of the nonionic moiety (for example, acrylamide or methacrylamide ) to the cationic moiety should be greater than about 1:1, on an active weight basis.

Other preferred polymers comprise: a) acrylamide or methacrylamide and b) METAMS, METAC, MAPTAC or AETAC, wherein the monomer ratio of a):b), on an active weight basis, is greater than about 1:1.

Preferred anionic flocculants are composed of polymers of 2-methacrylamido-2-methylpropylsulfonic acid and salts thereof, and copolymers of a) acrylic acid and/or methacrylic acid and b) 2-acrylamido-2-methylpropylsulfonic acid and/or 2-methacrylamido-2-methylpropylsulfonic acid. Hydrolyzed polyacrylamides may also be used. The preferred anionic polyelectrolytes possess a low charge (i.e., less than 2%) and are selected from the group consisting of polyacrylic acids and salts thereof, particularly sodium salts thereof, having a molecular weight

ranging from about 2 x $10^6$ to about 20 x $10^6$, hydrolyzed polyacrylamides having virtually any degree of hydrolysis and molecular weights ranging from about 2 x $10^6$ to about 20 x $10^6$, and polymers comprising a) acrylic acid of methacrylic acid and b) 2-acrylamido-2-methylpropylsulfonic acid and/or 2-methacrylamido-2-methylpropylsulfonic acid, wherein the weight ratio of a):b) ranges from about 1:99 to about 99:1, preferably 10:90 to 90:10 and most preferably 75:25, and wherein the molecular weight ranges from about 2 x $10^6$ to about 20 to $10^6$.

The inventor has also found that certain high molecular weight polyampholytes can be used in the instant method. Representative examples of suitable polyampholytes include polymers comprising a) acrylic acid, methacrylic acid, 2-acrylamido-2-methylpropylsulfonic acid or 2-methacrylamido-2-methylpropylsulfonic acid, alone or in combination, and b) dimethyldiallyl ammonium chloride, dimethyldiallyl ammonium bromide, diethyldiallyl ammonium chloride or diethyldiallyl ammonium bromide, alone or in combination, wherein the weight ratio of component a) to component b) ranges from about 90:10 to about 10:90 and wherein the polyampholyte has a molecular weight in excess of about 2 x $10^6$. The polyampholytes may also contain nonionic moieties such as acrylamide or methacrylamide.

Blends of the above listed nonionic, cationic, anionic and polyampholyte flocculants can be used, alone or in combination with amphoteric metal salts.

An effective amount of the polymeric flocculant should be added. The effective amount depends upon the quantity of melamine polymer present in the system being treated. Preferably, the effective flocculant dosage will range from about .01 to about 150 parts (active basis) of the polymeric flocculant per part melamine polymer (active basis) and more preferably, 0.1 to 20 parts, on an active polymer:active polymer basis.

The function of the polymeric flocculant is two-fold: it reacts with the melamine polymer treated paint solids to form a large, buoyant, easily-captured floc, and it reduces or totally eliminates foam formation in the system by removing colloidal particulates present in the water.

A requirement of the present invention is that the flocculant be added to the paint spray booth water after the over-sprayed, water-borne paint and solvent-borne paints are contacted with the alkalinity adjusted paint spray booth water and melamine polymer. Once the melamine polymer-treated paint solids have been contacted with at least one polymeric flocculant, the resulting sludge is removed from the water. This removal may be facilitated by any means known in the art, including, but not limited to, air flotation and filtration.

Other additives commonly used for the treatment of water containing over-sprayed paint may be used in conjunction with the instant method. For example, bentonite clays, carbon black, talc, gums, starch, dextrin, lime, aluminum oxide, silica solids, and casein among other additives, may be used as additional process aids in conjunction with the primary steps of the instant method. Additives from the class of amphoteric metal salts, including, but not limited to, alum, aluminum chloride, ferric sulfate and ferric chloride, can also be used to enhance the performance of the instant invention.

## EXAMPLES

The following examples demonstrate the instant invention. These examples are not intended to limit the invention in any way. Unless otherwise specified, reference to percentages or parts are by weight.

## EXAMPLE 1

Fig. 1 shows distinctions between solvent-based and water-based paints. To generate the data shown in Fig. 1, 0.2 gram of each designated paint was added to 200 mls of deionized water. A magnetic mixer at 500 rpm was used to provide agitation. The mixer was turned off and observations were recorded after one (1) hour. In Fig. 1:

BASF White is a solid color water-borne paint;

CIL Blue is a metallic water-borne paint;

CIL Clear Coat is a solvent-borne finish coat for use over water-borne paints;

DuPont Grey Primer is a solvent-borne primer; and

Red Topcoat is a solvent-borne, high-solids enamel paint.

In this figure low transmittance values correlate to highly dispersed paint solids. The water-borne solids in this example remained dispersed and were non-adherent.

## EXAMPLE 2

Solvent-borne paints are inherently tacky and, if not properly "killed," they are "smeary." An untreated solvent-borne paint in water will generally adhere to the sides of its container or float on the water surface. The term "killed," as used in this Example refers to the degree to which the recovered paint sludges were detackified, i.e., became less smeary and tacky. "Smear" was determined by wetting the investigator's hand and then placing a small amount of paint sludge on the palm of the investigator's hand. The paint sludge was then smeared on the palm and the floc structure broke down. The fines were then washed from the palm. The remaining "smeared" paint was compared to the initial sludge volume and assigned a rating on a scale of from 0 to 10, 0 representing the highest amount of smear, 10 representing no remaining smear. "Tack" was determined as the sticky feel of the paint sludge between the thumb and index finger of the investigator. Performance criteria for solvent-borne paints were rated on a similar scale of from 0 to 10, 0 representing the highest amount of tack, 10 representing no tack. The "kill" rating was determined by the following formula: (tack + smear)/2. Thus, a "kill" rating of 10 represented a perfect kill, i.e., complete detackification, while a rating of 0 represented live paint.

Water-based paints have an affinity for water, which is the primary solvent in water-based paint formulations. A water-borne paint will readily disperse in water and remain dispersed upon standing. Water clarity for an untreated water-borne paint is generally very low (i.e., <10% transmittance). Since water-borne paints by nature are not particularly tacky or smeary, performance criteria for water-borne paints were rated on a scale of from 0 to 10, 10 representing perfect clarity and 0 representing poor solids removal. The clarity rating was determined by the following formula: (% transmittance /10).

Combined water-borne and solvent-borne paints pose special problems in evaluation. Since the quality of treatment on water-borne paints is dictated by water clarity and the quality of treatment on the solvent-borne paints is dictated by the "kill," the performance of a combined paint system must be based on two criteria, whereas individual paint systems can be evaluated using a single criteria. Also, there is a cumulative negative impact on performance of a combined system due to the diverse behavior and nature of solvent-based and water-based paints. The following formula was developed in order to objectively evaluate these somewhat subjective performance parameters:

RELATIVE PERFORMANCE = [10-(10-"kill")-(10-%trans/10)]. Based on this formula, it is possible to have a relative performance range of +10 to -20. In a practical sense, the Relative Performance is from 10 to 0, 10 representing the best paint removal performance. In the higher alkalinity range solvent-borne paints are well detackified but can become overdispersed which causes an increase in fine suspended solids. This equation addresses the loss of performance of solvent-borne paints observed at high alkalinity.

In this Example, systems containing both water-based and solvent-based paints were evaluated using a range of alkalinity concentrations. The following steps were followed: the alkalinity of the water was adjusted to the desired range with the alkalinity agent; 200 mls water was added to a 400 ml widemouth jar, and the system was mixed on setting 9 of a Fisher Science Thermix Stirrer Model 120M. The melamine-formaldehyde polymer (M-F) was added in an amount of 0.5 ml, either before or after addition of the paints, or in an amount of 0.35 ml before addition of the paints and 0.15 ml after addition of the paints. The melamine-formaldehyde polymer used in this example was Calgon's PK-9511, which is commercially available from Calgon Corporation, Pittsburgh, Pennsylvania. The paints were added in an amount of 0.30 ml. The dispersibility of paint was noted, and the system was mixed for 45 seconds. The flocculant solution was added (4 ml of 1 g/L 'active' basis), and the system was mixed for 30 seconds. The stirrer was then turned off and the rise rate and sludge characteristics were noted. The system was then allowed to stand for 2 minutes. The investigator's palm was wetted with water, and one half of the resulting sludge was placed in the palm and rubbed into the palm with the other hand. The paint smear was evaluated as described above. A portion of unused paint sludge was then placed between the thumb and index finger and rubbed, and the paint tack was evaluated as described above. The water clarity was measured at 450 nm with a Bausch and Lomb Spectronic mini 20 apparatus. Finally,the Relative Performance was calculated as described above. The results are shown in Fig. 2.

## Claims

1. A method of treating circulating paint spray booth water containing both over-sprayed, water-borne paint and over-sprayed, solvent-borne paint, wich method comprises:

   (a) adjusting the alkalinity of said water to between about 100 and 600 ppm, on a calcium carbonate basis, by adding a source of alkalinity to said water;

   (b) adding to said water an effective amount of a melamine polymer comprising the reaction product of a melamine or a substituted melamine and a compound represented by the formula:

   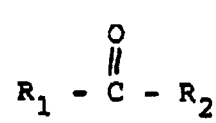

   wherein $R_1$ and $R_2$ are the same or different and are selected from the group consisting of H and straight or branched $C_{1-4}$ alkyl, and wherein the mol ratio of melamine or substituted melamine to said compound ranges from about 1:1 to about 1:6;

   (c) contacting over-sprayed, water-borne paint and over-sprayed solvent-borne paint with raid water, after completing step (a) and before or after completing step (b);

   (d) adding an effective amount of a flocculant

to said water after completing steps (a), (b) and (c); and
(e) removing resulting sludge from said water.

**2.** A method as defined by claim 1, wherein the alkalinity of said water is adjusted to between about 200 and 400 ppm.

**3.** A method as defined by claim 1, wherein the pH of said water is maintained in the range of about 6.0 to about 8.0.

**4.** A method as defined by claim 1, wherein the alkalinity source is selected from the group consisting of carbonates and silicates.

**5.** A method as defined by claim 4, wherein the alkalinity source is selected from sodium carbonate, sodium bicarbonate and mixtures thereof.

**6.** A method as defined by claim 1, wherein the melamine polymer comprises a melamine formaldehyde polymer.

**7.** A method as defined by claim 1, wherein the flocculant comprises a nonionic, anionic, cationic, or amphoteric flocculant or mixture thereof.

**8.** A method as defined by claim 7, wherein the flocculant is nonionic long chain polyacrylamide or nonionic long chain polymethacrylamide flocculant.

**9.** A method as defined by claim 8, wherein the nonionic flocculant has a weight average molecular weight of at least $2 \times 10^6$.

**10.** A method as defined by claim 1, wherein the melamine polymer is added to said water before the over-sprayed, water-borne and solvent-borne paints are contacted with the paint spray booth water.

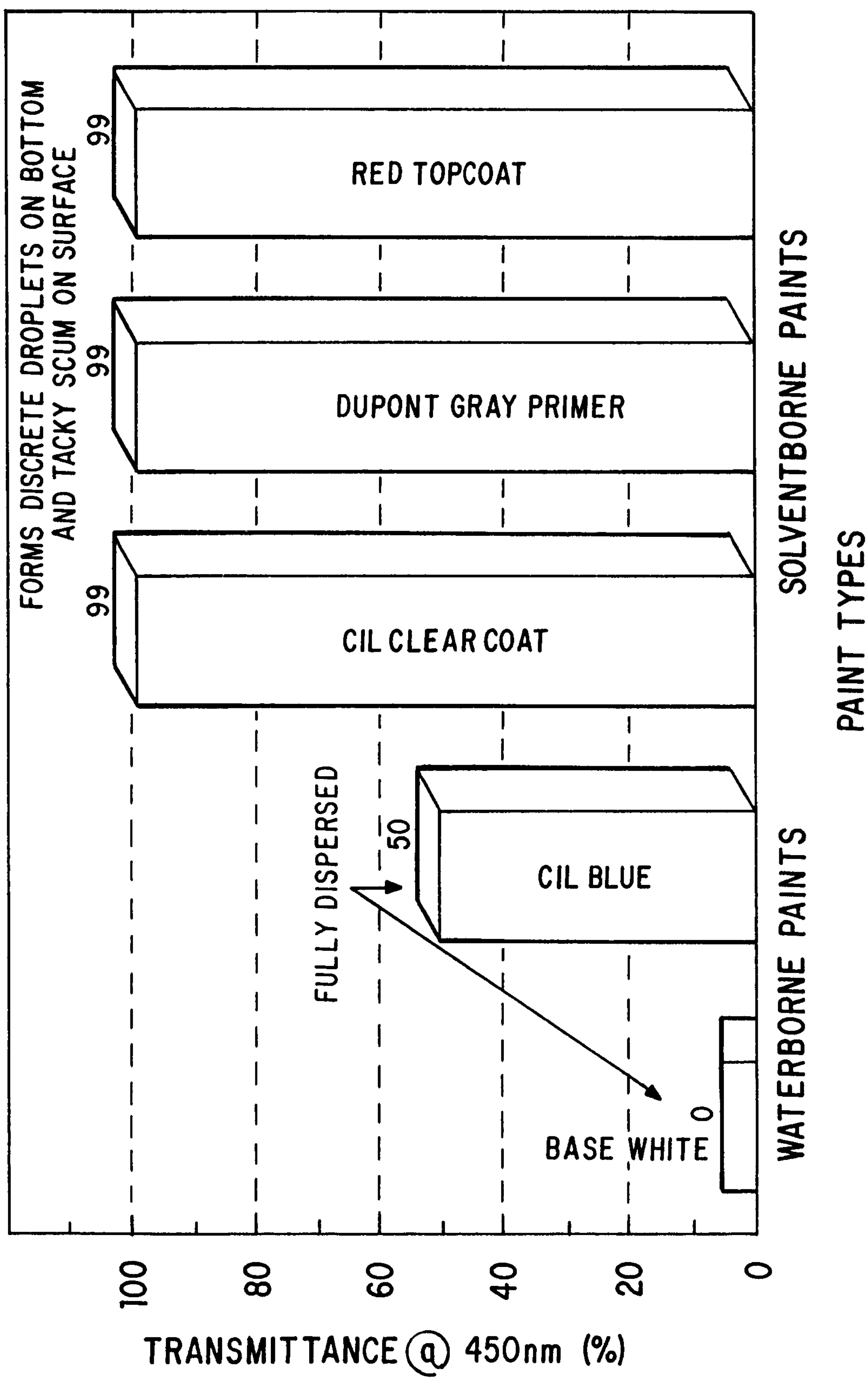
FORMS DISCRETE DROPLETS ON BOTTOM
AND TACKY SCUM ON SURFACE
99
RED TOPCOAT
99
DUPONT GRAY PRIMER
99
CIL CLEAR COAT
FULLY DISPERSED
50
CIL BLUE
0
BASE WHITE
WATERBORNE PAINTS
SOLVENTBORNE PAINTS
PAINT TYPES
0
20
40
60
80
100
TRANSMITTANCE @ 450nm (%)

FIG. 1

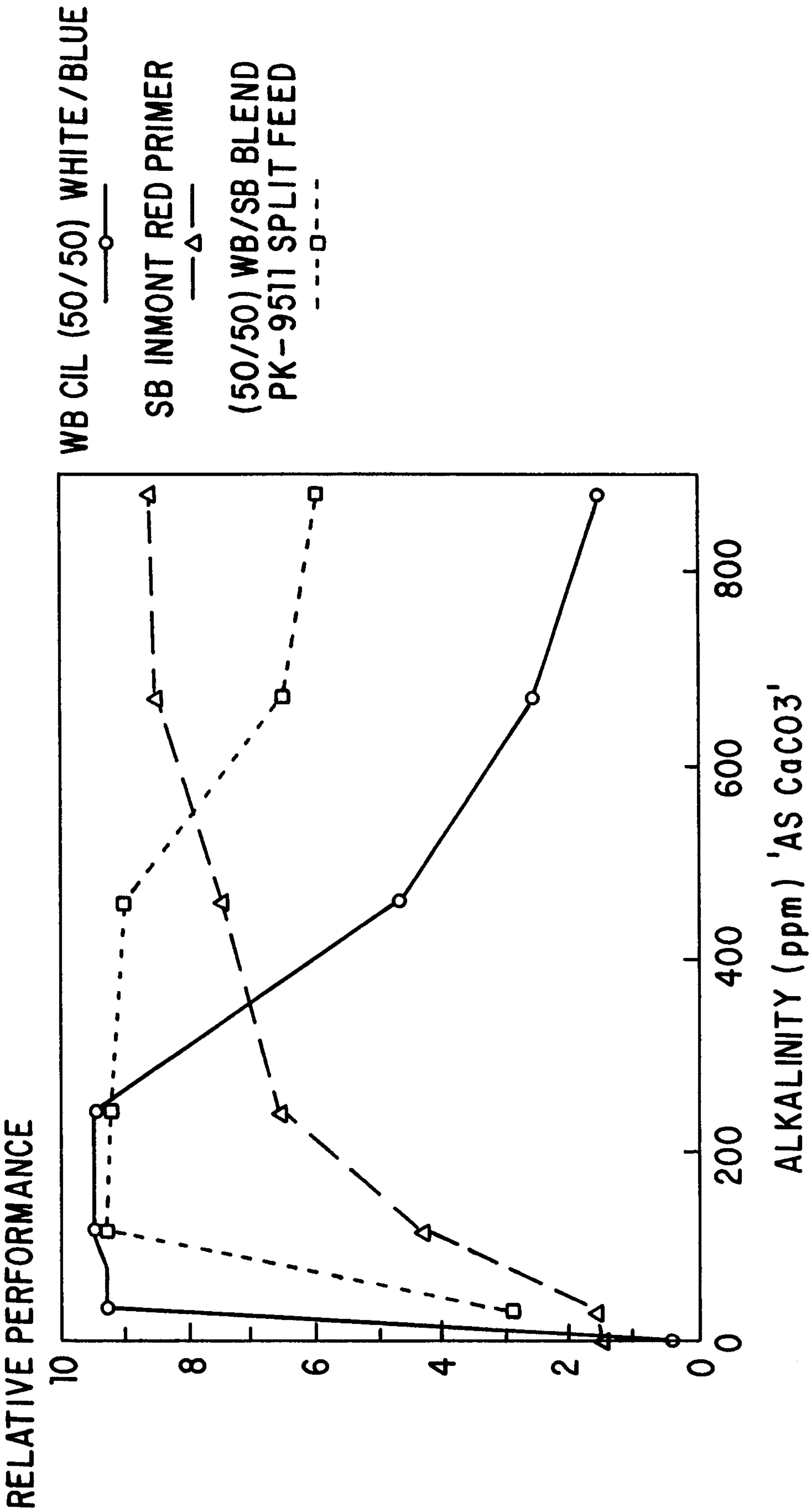
RELATIVE PERFORMANCE
10
8
6
4
2
0
0
200
400
600
800
ALKALINITY (ppm) 'AS CaCO3'
WB CIL (50/50) WHITE/BLUE
SB INMONT RED PRIMER
(50/50) WB/SB BLEND
PK-9511 SPLIT FEED

FIG. 2